# EUROPEAN PATENT SPECIFICATION

(11) **EP 2 827 252 B1**
(45) Date of publication and mention of the grant of the patent: **05.06.2019**
(21) Application number: 14177292.1
(22) Date of filing: 16.07.2014
(51) Int. Cl.: H04W 4/029, G06Q 30/02, G06F 17/40, G06F 17/30, G06Q 30/06, G06F 11/30, G06F 21/62, H04N 21/442, H04N 21/466, H04L 29/08, H04W 12/02, G06F 11/34

(54) **Device and method for providing user activity information in portable terminal**
Vorrichtung und Verfahren zur Bereitstellung von Benutzerinformationen in einem tragbaren Endgerät
Dispositif et procédé pour fournir des informations d'activité d'utilisateur dans un terminal portable

(30) Priority: 16.07.2013 KR 20130083403
(43) Date of publication of application: 21.01.2015
(73) Proprietor: Samsung Electronics Co., Ltd., Gyeonggi-do 443-742 (KR)
(72) Inventor: Kim, Jeong-Ja, Gyeonggi-do 443-742 (KR); Kim, Geun-Woo, Gyeonggi-do 443-742 (KR); Kim, Sang-Mi, Gyeonggi-do 443-742 (KR); Roh, Dong-Hyun, Gyeonggi-do 443-742 (KR); Lee, Jae-Won, Gyeonggi-do 443-742 (KR); Lee, Jin-Suk, Gyeonggi-do 443-742 (KR); Lee, Han-Jin, Gyeonggi-do 443-742 (KR); Chung, Sang-Yeong, Gyeonggi-do 443-742 (KR)
(74) Representative: Nederlandsch Octrooibureau

(56) References cited:
- WO-A1-02/093422
- US-A1- 2008 070 593
- US-A1- 2009 055 523
- US-A1- 2009 265 242
- US-A1- 2011 307 354

## Description

### Technical Field

The present disclosure relates to a portable terminal. More particularly, the present disclosure relates to a device and a method for providing user activity information.

### Background

A portable terminal, such as a smart phone or a tablet Personal Computer (PC), provides diverse and useful functions to a user through a variety of applications. With advances in technology, the portable terminal is evolving into a device that not only provides a voice call function, but a device that can use various types of information to provide a diversity of advanced functions. During execution of many such advanced functions, the portable terminal uploads log data thereof to a server.

The uploading of the log data to the server often occurs as a background event. That is, the log data is uploaded without approval or permission of the portable terminal user. Thus, since the log data is provided without the approval of the portable terminal's user when being uploaded to the server, personal information of the user is not protected.

Further, since the applications individually upload the log data to different servers on different occasions, identical log information is uploaded to the different servers, so that data resources are inefficiently utilized.

Even further, since the specific applications independently manage the log data, other applications cannot receive and utilize the log data, so that the log data is not efficiently used.

Thus, methods to address such problems as described above are required. That is, there exists a need for an improved apparatus and method for providing user activity information while protecting log data in an operating system of a portable terminal.

The above information is presented as background information only to assist with an understanding of the present disclosure. No determination has been made, and no assertion is made, as to whether any of the above might be applicable as prior art with regard to the present disclosure.

WO 02/093422 discloses a distributed recommendation system and method that provides greater privacy for the user's private data. The method distributes the tasks of a recommendation system between wireless devices and network servers, so as to protect the privacy of end users. The user's wireless device sends a current context-activity pair to a network server in response to either the user's selection of an activity or automatically. The user's wireless device includes a service history log. The activities stored in the service history log include past recommendations made by the network server, past services used, prestored service preferences, and special requested service requirements. Context-activity pair information sent to the server can include any combination of these activities. The server then responds with an appropriate recommendation.

US 2011/307354 discloses a method and apparatus for selecting an application to recommend to a user based on user profile information associated with the user and application profile information associated with the application, and propagating recommended application information toward a user device of the user, where the recommended application information includes an application executable of the recommended application. A method and apparatus are provided for receiving, at a user device, recommended application information comprising an application executable of an application recommended for a user of the user device, and automatically installing the application executable on the user device.

US 2018/070593 discloses a location sharing network manager process. The process is executed on a server computer coupled to a plurality of mobile communication devices over a wireless network. Each mobile device is a location-aware mobile communication device. The process determines the geographic location of a mobile communication device operated by a user within an area, displays a map representation of the area around the mobile communication device on a graphical user interface of the mobile communication device, and superimposes on the map the respective locations of one or more other trusted users of mobile communication devices coupled to the mobile communication device over the network. A security component allows users to establish trusted relationships by requiring mutual consent and disclosure of identifier and phone number information for each trusted user.

US 2009/265242 discloses an architecture that can mitigate privacy concerns in connection with ad targeting or data collection. In particular, the architecture can be included in a personal mobile communication device such as a cell phone. During communication transactions between the host device and a peer device, shared information can be extracted either from content included in the communication or from metadata. Based upon the shared information, a social graph maintained on the host device can be updated. In addition, the host device can receive a large set of ads and select or tailor a custom ad from the set based upon the social graph.

US 2009/055523 discloses communication applications (or tasks or services) that are likely (or more likely) to be used by a person in a particular situation can be identified as potential communication use of a particular device. Such potential uses can, for example, be made more assessable (or more readily available) and/or effectively recommended (or automatically initiated), thereby allowing a person to more conveniently use the device. By way of example, identifying communication applications or tasks that are likely to be used by a person in a particular situation for various reasons (e.g., preferences and/or habits of a person in a particular situation) as potential communication use of a system (e.g., computing and/or communication device) allows making the communications applications, tasks, or services more assessable and/or effectively recommending them for use in a particular situation.

### SUMMARY

The present invention is defined by independent apparatus claim 1 and independent method claim 8.

Aspects of the present disclosure are to address at least the above-mentioned problems and/or disadvantages and to provide at least the advantages described below. Accordingly, an aspect of the present disclosure is to provide a device and a method for providing user activity information while protecting log data in an operating system of a portable terminal.

Another aspect of the present disclosure is to provide a device and a method for providing user activity information while collecting and managing log data in a portable terminal.

In accordance with an aspect of the present disclosure, a device for providing user activity information in a portable terminal is provided. The device includes a log database configured to store log data related to a user activity, and a controller configured to store the log data received from a specific application, to generate user situation information, representing a current status of a user, based on the stored log data, and to transmit the generated user situation information to the specific application.

In accordance with another aspect of the present disclosure, a method for providing user activity information in a portable terminal is provided. The method includes storing log data received from a specific application, generating user situation information, representing a current status of a user, based on the stored log data, and transmitting the generated user situation information to the specific application.

An aspect of the present disclosure is to provide a device and a method for providing user activity information while protecting log data in an operating system of a portable terminal, which can protect personal information of a user.

Another aspect of the present disclosure is to provide a device and a method for providing user activity information while collecting and managing log data in a portable terminal, which can enhance efficiency of data resources.

Still another aspect of the present disclosure is to provide a device and a method for providing user activity information while collecting and managing log data in a portable terminal, which can more efficiently use the log data.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a configuration of a communication system according to an embodiment of the present disclosure;
FIG. 2 is a block diagram illustrating a portable terminal according to an embodiment of the present disclosure;
FIG. 3 is a block diagram illustrating a context service unit according to an embodiment of the present disclosure;
FIG. 4 is a flowchart illustrating a process of setting access authority for user activity information in a portable terminal according to an embodiment of the present disclosure;
FIG. 5 is a flowchart illustrating a process of collecting user activity information in a portable terminal according to an embodiment of the present disclosure;
FIG. 6 is a flowchart illustrating a process of providing user activity information in a portable terminal according to an embodiment of the present disclosure;
FIG. 7 is a flowchart illustrating a process of providing a recommended music list in a portable terminal according to a first embodiment of the present disclosure;
FIG. 8 is a flowchart illustrating a process of providing a contact list and an application list, which are related to a current location, in a portable terminal according to a second embodiment of the present disclosure;
FIG. 9 illustrates a screen on which log data is deleted according to an embodiment of the present disclosure;
FIG. 10 illustrates a screen on which a recommended music list is provided according to the first embodiment of the present disclosure;
FIG. 11 illustrates a screen on which a contact list and an application list, which are related to a current location, are provided according to the second embodiment of the present disclosure; and
FIG. 12 illustrates a screen on which a popup window for setting a data network is provided according to a third embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

A terminal according to an embodiment of the present disclosure may include a portable terminal that can be easily carried, or an electronic device that cannot be easily carried. The electronic device that cannot be easily carried may include a personal computer, and the portable terminal that can be easily carried may include a video telephone, a cellular phone, a smart phone, an International Mobile Telecommunication 2000 (IMT-2000) terminal, a Wideband Code Division Multiple Access (WCDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an Electronic Book (E-Book), a portable computer (e.g., a Notebook computer, a tablet personal computer, etc.), a digital camera, or the like.

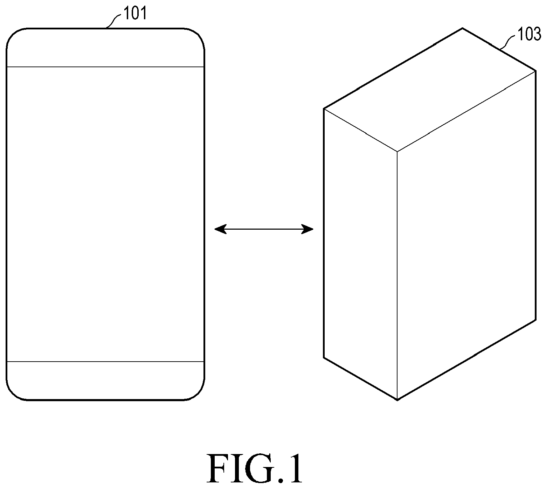

FIG. 1 illustrates a configuration of a communication system according to an embodiment of the present disclosure.

Referring to FIG. 1, the communication system includes a portable terminal 101 and a server 103.

The portable terminal 101 transmits log data for a user activity to the server 103, receives user customized journal information based on the log data from the server 103, and provides journal information, which a user prefers, to the user based on the received user customized journal information. For example, the portable terminal 101 detects log data, which the user has consented to transmit to the server 103, among pre-stored log data of the user activity, and transmits the detected log data to the server 103.

The log data for the user activity refers to activity information of the user that occurs through an application. For example, the log data for the user activity may include at least one of a call log, a chatting log, a music/video playback log, a web browsing log, an e-book reading log, and the like, and an identifier of at least one application that processes the corresponding log. The user customized journal information refers to journal information that the user of the portable terminal 101 prefers, and, for example, may include music, a movie, a site, broadcasting, and the like, which have been recommended.

The server 103 receives the log data for the user activity from the portable terminal 101, analyzes preferences of the corresponding user based on the received log data, generates the user customized journal information based on the analyzed preferences, and transmits the generated user customized journal information to the portable terminal 101. The preferences of the user may include a movie, music, a site, broadcasting, and the like, which the user prefers.

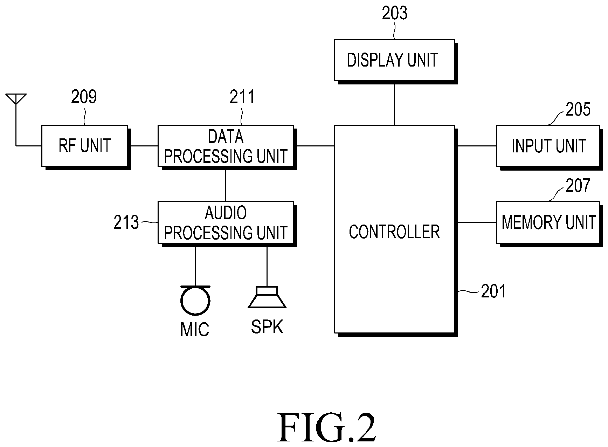

FIG. 2 is a block diagram illustrating a portable terminal according to an embodiment of the present disclosure.

Referring to FIG. 2, the portable terminal may include a controller 201, a display unit 203, an input unit 205, a memory unit 207, a RadioFrequency (RF) unit 209, a data processing unit 211, and an audio processing unit 213.

The RF unit 209 may perform a wireless communication function of the portable terminal 101. For example, the RF unit 209 may include a wireless transmitter that up-converts and amplifies a frequency of a signal that is to be transmitted, and a wireless receiver that low-noise amplifies a received signal and down-converts a frequency. The data processing unit 211 may include a transmitter that encodes and modulates a signal that is to be transmitted, and a receiver that demodulates and decodes the received signal. The data processing unit 211 may be configured with a modem and a codec, and the codec may include a data codec that processes packet data, and an audio codec that processes an audio signal such as a voice.

The audio processing unit 213 may play back a received audio signal, being output from the data processing unit 211, through a speaker, and transmits a transmitting audio signal, occurring from a microphone, to the data processing unit 211.

The input unit 205 may include keys for an input of number and character information, and function keys for settings of various functions. The display unit 203 may display an image signal on a screen, and may display data that the controller 201 has requested the display unit 203 to output. When the display unit 203 is implemented with a touch display screen method such as a capacitive touch screen or a pressure sensitive touch screen, the input unit 205 may include only minimal keys set in advance, and the display unit 203 may replace some key input functions of the input unit 205.

The memory unit 207 may include a program memory and a data memory. The program memory may store booting and operating systems for controlling general operations of the portable terminal, and the data memory may store various data generated while the portable terminal is being operated. More particularly, the memory unit 207 stores an Operating System (OS) including a context service unit, for providing a service, and stores at least one application that provides a specific function.

The controller 201 may control an overall operation of the portable terminal 101. For example, the controller 201 may collect, analyze, use, and transmit, to the server 103, user activity information, at an OS end through executing the context service unit.

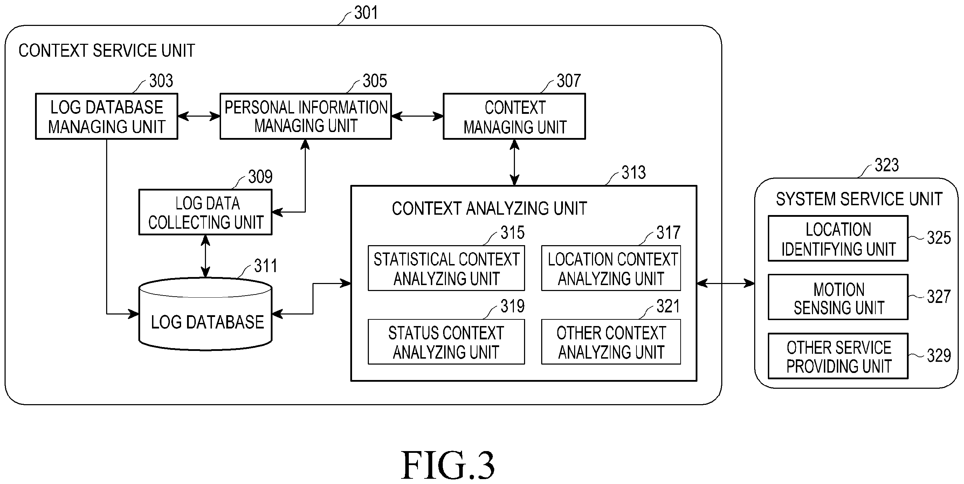

FIG. 3 is a block diagram illustrating a context service unit according to an embodiment of the present disclosure.

Referring to FIG. 3, a context service unit 301 includes a log database managing unit 303, a personal information managing unit 305, a context managing unit 307, a log data collecting unit 309, a log DataBase (DB) 311, a context analyzing unit 313, and a system service unit 323.

The system service unit 323 includes at least one device that may collect information to determine a situation of a user, and, for example, includes a location identifying unit 325, a motion sensing unit 327, and an additional service providing unit 329.

The location identifying unit 325 identifies a location of the portable terminal 101, generates information on the identified location of the portable terminal 101, and transmits the generated location information of the portable terminal 101 to the context analyzing unit 313. For example, the location identifying unit 325 identifies the location of the portable terminal 101 through a Global Positioning System (GPS), and transmits, to the context analyzing unit 313, the location information including coordinates for the location of the portable terminal 101.

As another example, the location identifying unit 325 identifies the location of the portable terminal 101 through an Indoor Position System (IPS), and transmits, to the context analyzing unit 313, the location information including the location of the portable terminal 101. The IPS is a system that determines a location of a counterpart portable terminal, located at close range, through a Bluetooth, Wi-Fi, or Long Term Evolution (LTE) network.

The motion sensing unit 327 senses a movement of the portable terminal 101, generates movement information on the sensed movement, and transmits the generated movement information of the portable terminal 101 to the context analyzing unit 313. For example, the motion sensing unit 327 may include a geo-magnetic sensor and an acceleration sensor, generate movement information, including a movement direction sensor value, a movement distance sensor value, and an angle sensor value of the portable terminal 101, by using the geo-magnetic sensor and the acceleration sensor, and transmit the generated movement information to the context analyzing unit 313.

The additional service providing unit 329 identifies a type and a status of external devices that are attached to and detached from the portable terminal 101, and transmits, to the context analyzing unit 313, the identified external device related information. For example, when the portable terminal 101 is connected with a headset, the additional service providing unit 329 may identify that the portable terminal 101 has been connected with the headset, generate external device related information, representing that the external device is the headset and is in a state of being connected with portable terminal 101, and transmit the generated external device related information to the context analyzing unit 313. In a case where the external device includes a battery, the external device related information may include battery level information of the external device.

The context analyzing unit 313 generates user situation information by analyzing a user situation based on the log data for the user activity and the information (e.g., the location information, the movement information, the external device related information, etc.) received from the system service unit 323. The context analyzing unit 313 includes a statistical context analyzing unit 315, a location context analyzing unit 317, a status context analyzing unit 319, and an additional context analyzing unit 321.

The statistical context analyzing unit 315 generates statistical user situation information based on the log data for the user activity. The log data for the user activity refers to activity information of a user occurring through an application. For example, the log data for the user activity may include at least one of a call log, a chatting log, a music/video playback log, a web browsing log, an e-book reading log, a data communication log, and the like, and an identifier of at least one application that processes the corresponding log.

As an example, the statistical context analyzing unit 315 may generate a music list, containing pieces of music having a high playback frequency, based on a music/video playback log including information on at least one piece of music played back through a music playback application. As another example, the statistical context analyzing unit 315 may generate a contact list, containing a plurality of contacts having a high contact frequency in an office, based on a call log and location information of the portable terminal 101. As another example, the statistical context analyzing unit 315 may generate an application list, containing a plurality of applications having a high execution frequency while the portable terminal is connected with a headset, based on status information and a time-stamp of an external device.

The location context analyzing unit 317 identifies the location of the portable terminal 101 based on the location information received from the location identifying unit 325, and generates location related user situation information based on the identified current location. For example, the location related user situation information may include information representing a location, a place, a city, a country, or the like where the portable terminal 101 is currently situated.

The status context analyzing unit 319 generates status related user situation information through monitoring a current status of the portable terminal. For example, the status context analyzing unit 319 may generate the status related user situation information through monitoring a Wi-Fi connection status, a headset/earphone/Mobile High-definition Link (MHL) cable connection status, a list of music being currently played back, current weather, and the like, based on the log data for the user activity and the external device related information.

The additional context analyzing unit 321 generates sensor related user situation information based on the sensor information included in the portable terminal 101. For example, the additional context analyzing unit 321 may generate the sensor related user situation information including a user moving status (e.g., walking, running, jumping, etc.), based on motion information.

The context managing unit 307 receives user situation information from the context analyzing unit 313, and transmits the received user situation information to a specific application or the server 103. More particularly, the context managing unit 307 receives the user situation information from the statistical context analyzing unit 315, and the location context analyzing unit 317, the status context analyzing unit 319, and the additional context analyzing unit 321, itemizes the received user situation information, and transmits the itemized user situation information to the specific application or the server 103. When the user situation information is updated, the context managing unit 307 generates a user situation update message informing of the update of the user situation information, and transmits the generated user situation update message to the specific application or the server 103. The context managing unit 307 provides an interface that can receive the user situation information from the specific application.

Meanwhile, the context managing unit 307 may provide user situation information to a specific application. For example, the context managing unit 307 determines whether a user situation information request message requesting user situation information has been received from the specific application.

When it is determined that the user situation information request message has been received, the context managing unit 307 identifies the type of the user situation information requested from the specific application, by analyzing the user situation information. The context managing unit 307 selects any one of the plurality of context analyzing units included in the context analyzing unit 313, based on the type of the identified user situation information. The context managing unit 307 transmits the user situation information request message to the selected context analyzing unit.

The selected context analyzing unit receives the request message for the user situation information, and determines whether supplying of the user situation information for the specific application is valid. At this time, the selected context analyzing unit transmits, to the personal information managing unit 305, an authority inquiry message inquiring of the authority for reference/usage of the user situation information for the specific application. The selected context analyzing unit receives, from the personal information managing unit 305, an authority inquiry result message as a response to the authority inquiry message, and determines, by analyzing the received authority inquiry result message, whether supplying of the user situation information for the specific application is valid.

When it is determined that the supplying of the user situation information for the specific application is valid, the selected context analyzing unit generates user situation information, and transmits the generated user situation information to the specific application. If the supplying of the user situation information for the specific application is not valid, the selected context analyzing unit generates a message representing that the supplying of the user situation information for the specific application is not valid so that the user situation information is not to be supplied, and transmits, to the specific application, the generated message representing that the supplying of the user situation information for the specific application is not valid.

The log database 311 stores the log data for the user activity. At this time, the log database 311 may store the log data as application related log data (e.g., a weather log received from a weather application) or activity log data (e.g., a data communication log, a music/video playback log, a web browsing log, an e-book reading log, and the like). The log data collecting unit 309 detects the activity log data among the log data stored in the log database 311, and transmits the detected activity log data to the server 103.

The log database managing unit 303 collects, from a specific application or the system service unit 323, or in itself, the log data for the user activity, or additional information related to the log data (e.g., a time-stamp, location information, place information, external device related information, etc.), and stores the collected log data in the log database 311. The log database managing unit 303 provides functions (e.g., inserting, updating, deleting, searching, etc.) for the log data stored in the log database 311.

At this time, the log database managing unit 303 may receive the location information from the context analyzing unit 313, and may collect, for itself, the time-stamp, the location information, the external device related information, and the like.

At this time, the log database managing unit 303 may store the log data for the user activity, together with the time-stamp (e.g., time when an event has occurred), the location information of the portable terminal 101 (e.g., location information of the portable terminal 101 when the event has occurred), the place information (e.g., information on the specific place such as a home or an office), the external device related information (e.g., status information of the external device attached to the portable terminal 101 and battery information), the weather information (e.g., weather condition when the event has occurred), and other several pieces of additional information.

For example, the log database managing unit 303 may log, from a phone call application, a call log including information such as a phone number, and may log, from the context analyzing unit 313, the time-stamp (e.g., time when an event has occurred), the location information of the portable terminal 101 (e.g., location information of the portable terminal 101 when the event has occurred), the place information (e.g., information on the specific place such as a home or an office), the external device related information (e.g., status information of the external device attached to the portable terminal 101 and battery information), and the weather information (e.g., weather condition when the event has occurred). The log database managing unit 303 may log an application usage log from the context analyzing unit 313, irrespective of the specific application.

Meanwhile, the log database managing unit 303 may collect user activity information. For example, the log database managing unit 303 determines whether storage of a user activity log has been requested from a specific application. At this time, the log database managing unit 303 may receive log data together with a message requesting the storage of the user activity log. For example, when the specific application is a music playback application, the log database managing unit 303 may receive a Uniform Resource Identifier (URI) and meta-information of a music file, which are information acquired through the music playback application, together with log information.

When it is determined that the storage of the user activity log has been requested, the log database managing unit 303 receives the log information, and receives additional information (e.g., a time-stamp, location information, place information, external device related information, and the like) from the context analyzing unit 313. The log database managing unit 303 generates log data based on the log information and the additional information. At this time, the log database managing unit 303 may generate the log data through combining the log information and the additional information.

The log database managing unit 303 stores the generated log data in the log database 311, generates a log database update message representing that the log database has been updated, and transmits the generated log database update message to the context managing unit 307.

Meanwhile, when receiving the log database update message, the context managing unit 307 may determine a time when the user situation information is to be updated. For example, as soon as the log database update message is received, the context managing unit 307 may generate the user situation information based on the updated log data.

Meanwhile, the context service unit 301 generates user situation information based on the log data for the user activity, the location information, and the movement information. The collected log data and the generated user situation information are necessary to protect as personal information. To this end, the personal information managing unit 305 protects personal information for usage of the log data collected in the portable terminal 101, usage of the user situation information, and uploading the collected log data and the user situation information to the server 103.

Only the application for which a user has consented to usage of personal information may use the user's personal information, in which the personal information managing unit 305 manages the following authority:
- Authority for reference/usage of a user activity log
- Authority for reference/usage of user situation information
- Authority for the user activity log uploaded to the server 103

More particularly, the personal information managing unit 305 stores user activity registration information representing whether the log data for the user activity may be referred to or used for each application, and determines based on the user activity registration information whether the specific application has been authorized for reference/usage of the user activity log data, when a request for the reference/usage of the user activity log data is input from the specific application. When it is determined that the specific application has been authorized for the reference/usage, the personal information managing unit 305 detects log data, for which the specific application has been authorized for the reference/usage, among the log data stored in the log database 311, and transmits the detected log data to the specific application. On the other hand, when it is determined that the specific application has not been authorized for the reference/usage, the personal information managing unit 305 transmits, to the specific application, a first no authority message representing that the specific application does not have the authority for the reference/usage of the user activity log data.

The personal information managing unit 305 stores user situation registration information representing whether the user situation information may be referred to or used for each application, and determines based on the user situation registration information whether the specific application has been authorized for reference/usage of the user situation information, when a request for the reference/usage of the user situation information is input from the specific application. When it is determined that the specific application has been authorized for the reference/usage, the personal information managing unit 305 detects the user situation information, for which the specific application has been authorized for the reference/usage, among the user situation information stored in the log database 311, and transmits the detected user situation information to the specific application. On the other hand, when it is determined that the specific application has not been authorized for the reference/usage, the personal information managing unit 305 transmits, to the specific application, a second no authority message representing that the specific application does not have the authority for the reference/usage of the user situation information.

The personal information managing unit 305 stores upload registration information representing the log data, which a user has consented to upload, among the log data for the user activity, detects, based on the upload registration information, the log data, which the user has consented to upload, among the log data included in the log database, and periodically transmits the detected log data to the server 103.

The context service unit 301 provides a context setting application for deleting the user activity log data. The context setting application is an independent application, and the specific application related to the context service unit 301 may execute the context setting application through an application control.

The context setting application provides functions for registering the type of log data collected and used in the portable terminal 101 and the type of log data uploaded to the server 103, and deleting the activity log data. For example, as displayed on a screen, the context setting application may display titles of the activity log data and messages inquiring whether the activity log data is to be deleted.

However, since the log data for the user activity collected in the application or the context service unit 301 is shared with the application related to the context service unit 301, the context setting application may display that the application may not work properly when deleting the corresponding log data. For example, the context setting application may display a popup window that includes a message representing that other applications may not work properly when deleting call log data, and a message inquiring whether the call log data is to be deleted.

In addition, the context setting application may provide context service related setting functions, including a function of displaying the type of collected/used logs, a function of starting/ending log collection, a function of displaying the type of the log uploaded to the server, and a function of consenting/non-consenting to an upload to the server.

The context service unit 301 informs the specific application of an update of the user situation information.

For example, the context service unit 301 informs of the update of the user situation information requested from the specific application. The context analyzing unit 313 generates the user situation information based on the log data information and the information (e.g., location information, movement information, external device related information, etc.) provided from the system service unit 323, and transmits, to the specific application, changed contents of the user situation information (e.g., a change in the location information, the Wi-Fi status, the battery level, etc.) when the generated situation information is changed.

Meanwhile, the controller 201 may set access authority for the user activity information.

For example, the controller 201 determines whether a specific application is being executed by a user. When it is determined that the specific application is being executed, the controller 201 executes the specific application, and requests user activity registration information corresponding to the specific application from the personal information managing unit 305. Meanwhile, the personal information managing unit 305, having received the message requesting the user activity registration information, searches for user activity registration information corresponding to the specific application among the stored user activity registration information, and transmits, to the controller 201, the user activity registration information obtained by the searching.

The controller 201 determines whether the user activity registration information corresponding to the specific application has been received. When it is determined that the user activity registration information has been received, the controller 201 displays the type of the log data, which the specific application is permitted to refer/use, based on the received user activity registration information, and displays a message for determining whether the reference/usage for the displayed type of log data is to be approved. The controller 201 determines through a user input whether the reference/usage for the displayed type of log data has been approved.

When it is determined that the reference/usage has been approved, the controller 201 generates user activity usage consent information representing that the reference/usage for the displayed type of log data has been approved, and transmits the generated user activity usage consent information to the personal information managing unit 305. Meanwhile, the personal information managing unit 305 receives the user activity usage consent information, and updates the user activity registration information for each application, based on the received user activity usage consent information, such that the specific application may refer/use the displayed type of log data.

If it is determined that the reference/usage has been refused, the controller 201 generates user activity usage refusal information representing that the reference/usage for the displayed type of log data has been refused, and transmits the generated user activity usage refusal information to the personal information managing unit 305. Meanwhile, the personal information managing unit 305 receives the user activity usage refusal information, and updates the user activity registration information for each application, based on the received user activity usage refusal information, such that the specific application is prevented from referring/using the displayed type of log data.

The controller 201 may provide a customized music list to a user, while protecting the personal information through the context service unit 301.

For example, the context service unit 301 receives log information of a user activity related to music from a specific application, generates log data for the user activity based on the received activity log information and additional information, and stores the generated log data in the log database 311. The user activity related to the music includes a music/video playback log.

When the log data related to the music is permitted to be uploaded to the server, the context service unit 301 detects log data related to music among the log data stored in the log database 311, and transmits the detected log data to the server 103. The context service unit 301 detects log data for an activity which a user has most frequently performed after a headset was connected (e.g., information on the frequently listened music or information on the frequently viewed video), among the log data stored in the log database 311, and transmits the detected log data to a music playback application.

When being executed by the user or being automatically executed through a connection of the headset, the music playback application generates and displays a frequently listened music list based on the detected log data.

The music playback application receives customized music recommendation data from the server 103, and stores the music recommendation data. The customized music recommendation data corresponds to data including a music list recommended in view of a preference of a user.

The music playback application generates a recommended music list based on the customized music recommendation data, and displays the recommended music list. The recommended music list may be a music list containing a music genre similar to that which a user frequently plays back, or another music list (e.g., a new music list) of a musician whose music a user frequently plays back.

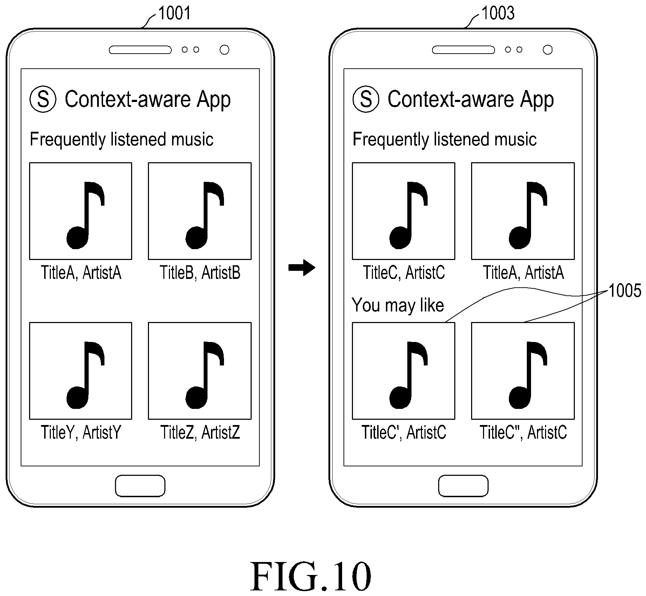

FIG. 10 illustrates a screen on which a recommended music list is provided according to a first embodiment of the present disclosure.

Referring to FIG. 10, as displayed on a screen 1001, the music playback application may display a list of music to which a user frequently listens. When receiving the customized music recommendation data from the server 103, the music playback application may detect a recommended music list from the customized music recommendation data, and may display the list of the music, to which the user frequently listens, together with the detected recommended music list 1005, as displayed on a screen 1003.

Further, the controller 201 may provide an application list and a contact list corresponding to a current location to a user, while protecting the personal information through the context service unit 301.

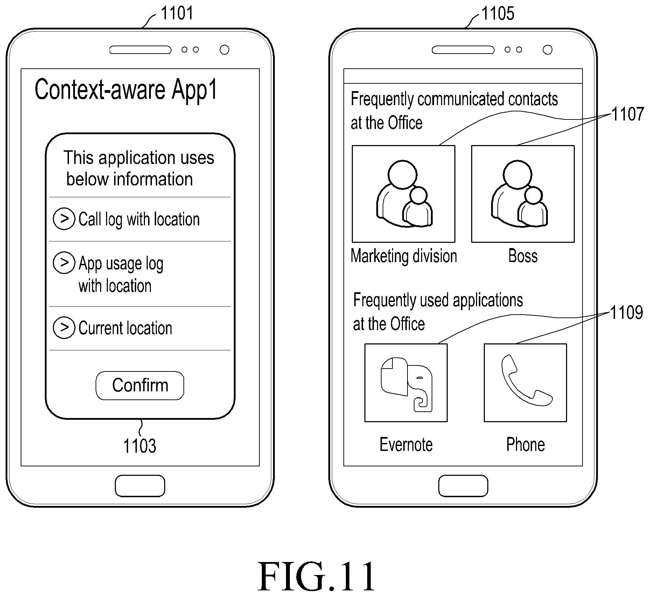

FIG. 11 illustrates a screen on which a contact list and an application list, which are related to a current location, are provided according to a second embodiment of the present disclosure.

Referring to FIG. 11, the controller 201 determines whether a specific application is being executed. When it is determined that the specific application is being executed, the controller 210 identifies log data for a user activity necessary for the specific application, and displays a list of the identified log data of the user activity and a message inquiring whether reference/usage of the log data is to be approved. For example, as displayed on a screen 1101, the controller 201 may display a popup window 1103 that includes a list of log data and a message inquiring whether reference/usage of the listed log data is to be approved.

The controller 201 determines whether reference/usage of the log data for the user activity corresponding to the specific application is to be approved by the user. When it is determined that the reference/usage of the log data for the user activity has been approved, the controller 210 requests the log data for the user activity related to a current location of the portable terminal 101 from the context service unit 310, and determines whether the log data for the user activity related to the current location of the portable terminal 101 is to be received. The log data for the user activity related to the current location of the portable terminal 101 includes a list of applications having a high execution frequency at the current location, and a list of contacts having a high contact frequency at the current location.

When it is determined that the log data has been received, the controller 201 determines the list of the applications having the high execution frequency at the current location and the list of the contacts having the high contact frequency at the current location, by analyzing the log data related to the received current location. The controller 201 displays the contact list and the application list, which have been identified through the specific application. For example, when the portable terminal is currently located in an office, the controller 210 may display a list 1107 of contacts having a high contact frequency and a list 1109 of applications having a high execution frequency in the office as illustrated on a screen 1105.

Further, the controller 201 may provide a message for setting a network, while protecting the personal information through the context service unit 301.

For example, the controller 201 receives user situation information from the context service unit 310, and determines, based on the received user situation information, whether the portable terminal is in a roaming status and whether the portable terminal is currently located abroad. When it is determined that the portable terminal is in the roaming state and is currently located abroad, the controller 201 provides a message for setting a data network.

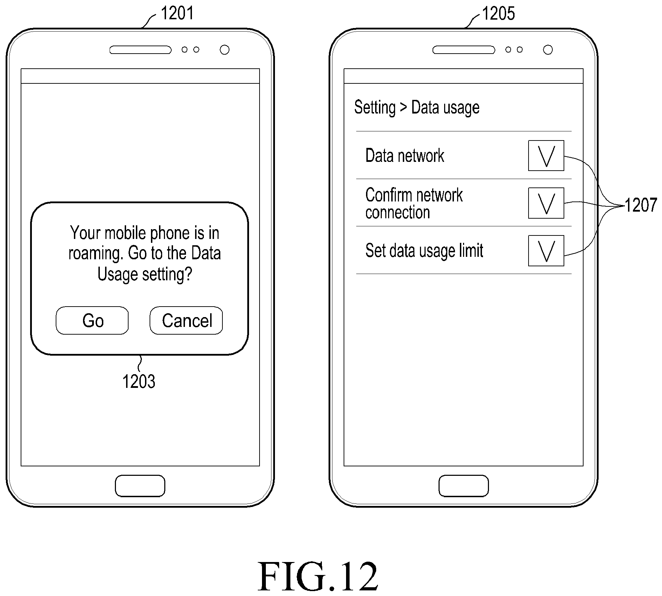

FIG. 12 illustrates a screen on which a popup window for setting a data network is provided according to a third embodiment of the present disclosure.

Referring to FIG. 12, as displayed on a screen 1201, the portable terminal 101 may be in a roaming state, and may display a popup window 1203 for inquiring whether a data network setting is to be executed. When a user requests the execution of the data network setting, the controller 201 may display data network setting menus 1207 as displayed on a screen 1205.

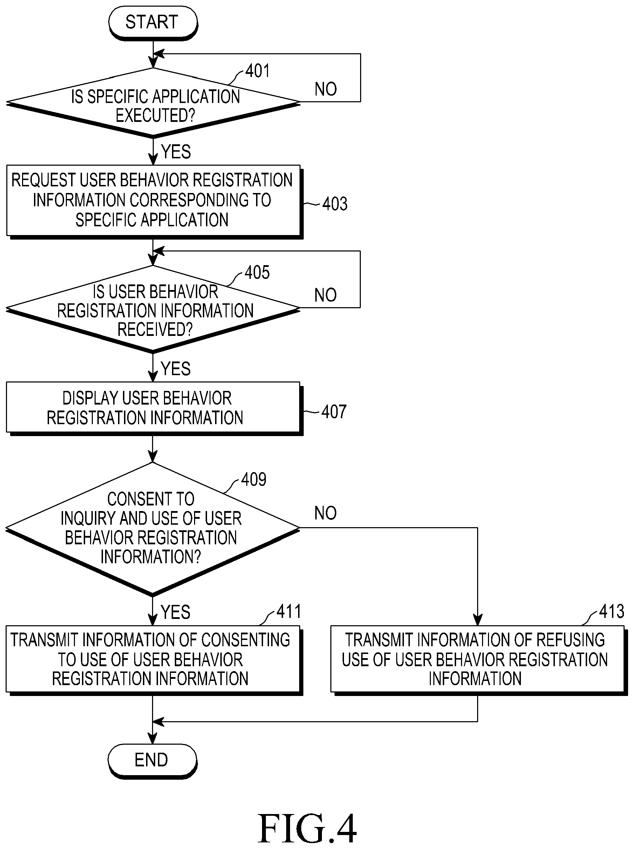

FIG. 4 is a flowchart illustrating a process of setting access authority for user activity information in a portable terminal according to an embodiment of the present disclosure.

Referring to FIG. 4, in operation 401, a controller 201 determines whether a specific application is being executed by a user. The controller 201 proceeds to operation 403 when it is determined that the specific application is being executed, and repeatedly performs operation 401 when it is determined that the specific application is not being executed.

When proceeding to operation 403, the controller 201 executes the specific application and requests user activity registration information corresponding to the specific application from a personal information managing unit 305. Meanwhile, the personal information managing unit 305, having received the message requesting the user activity registration information, searches for user activity registration information corresponding to the specific application among the stored user activity registration information, and transmits, to the controller 201, the user activity registration information obtained by the searching.

In operation 405, the controller 201 determines whether the user activity registration information corresponding to the specific application has been received. The controller 201 proceeds to operation 407 when it is determined that the user activity registration information has been received, and repeatedly performs operation 405 when it is determined that the user activity registration information has not been received.

When proceeding to operation 407, the controller 201 displays the type of the log data, which the specific application is permitted to refer/use, based on the received user activity registration information and displays a message for determining whether the reference/usage for the displayed type of log data is to be approved. In operation 409, the controller 201 determines through a user input whether the reference/usage for the displayed type of log data has been approved. The controller 201 proceeds to operation 411 when it is determined that the reference/usage for the displayed type of log data has been approved, and proceeds to operation 413 when it is determined that the reference/usage for the displayed type of log data has not been approved.

When proceeding to operation 411, the controller 201 generates user activity usage consent information representing that the reference/usage for the displayed type of log data has been approved by the user, and transmits the generated user activity usage consent information to the personal information managing unit 305. Meanwhile, the personal information managing unit 305 receives the user activity usage consent information, and updates the user activity registration information for each application, based on the received user activity usage consent information, such that the specific application may refer/use the displayed type of log data.

When proceeding to operation 413, the controller 201 generates user activity usage refusal information representing that the reference/usage for the displayed type of log data has been refused by the user, and transmits the generated user activity usage refusal information to the personal information managing unit 305. Meanwhile, the personal information managing unit 305 receives the user activity usage refusal information, and updates the user activity registration information for each application, based on the received user activity usage refusal information, such that the specific application is prevented from referring/using the displayed type of log data.

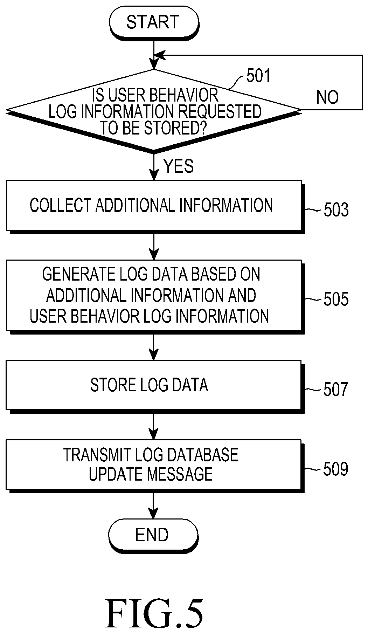

FIG. 5 is a flowchart illustrating a process of collecting user activity information in a portable terminal according to an embodiment of the present disclosure.

Referring to FIG. 5, in operation 501, a log database managing unit 303 determines whether storage of a user activity log has been requested from a specific application. At this time, the log database managing unit 303 may receive log data together with a message requesting the storage of the user activity log. For example, when the specific application is a music playback application, the log database managing unit 303 may receive a URI and meta-information of a music file, which are information acquired through the music playback application, together with log information.

The log database managing unit 303 proceeds to operation 503 when it is determined that the storage of the user activity log has been requested, and repeatedly performs operation 501 when it is determined that the storage of the user activity log has not been requested.

When proceeding to operation 503, the log database managing unit 303 receives the log information and collects additional information (a time-stamp, location information, place information, external device related information, and the like) from the context analyzing unit 313 or for itself. At this time, the log database managing unit 303 may receive location information from the context analyzing unit 313, and may directly collect a time-stamp, place information, external device related information, and the like.

In operation 505, the log database managing unit 303 generates log data based on the log information and the additional information. At this time, the log database managing unit 303 may generate the log data through combining the log information and the additional information.

In operation 507, the log database managing unit 303 stores the generated log data in the log database 311, and, in operation 509, generates a log database update message representing that the log database has been updated and transmits the generated log database update message to the context managing unit 307.

Meanwhile, when receiving the log database update message, the context managing unit 307 may determine a time when the user situation information is to be updated. For example, as soon as the log database update message is received, the context managing unit 307 may generate the user situation information based on the updated log data.

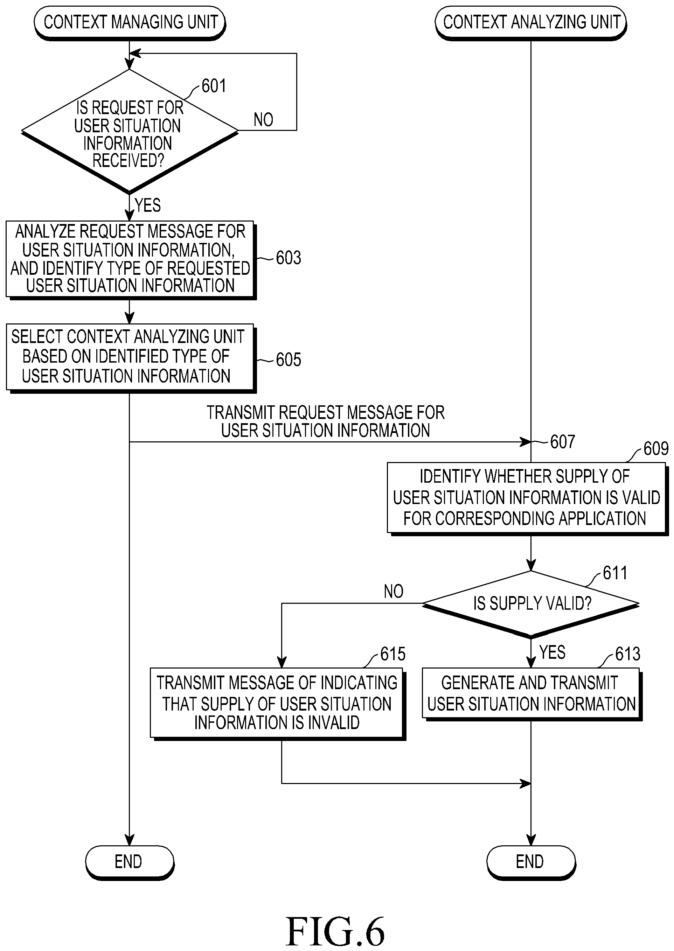

FIG. 6 is a flowchart illustrating a process of providing user activity information in a portable terminal according to an embodiment of the present disclosure.

Referring to FIG. 6, in operation 601, the context managing unit 307 determines whether a user situation information request message requesting user situation information has been received from the specific application. The context managing unit 307 proceeds to operation 603 when it is determined that the user situation information request message has been received, and repeatedly performs operation 601 when it is determined that the user situation information request message has not been received.

When proceeding to operation 603, the context managing unit 307 identifies the type of the user situation information requested from the specific application, by analyzing the user situation information, and proceeds to operation 605. In operation 605, the context managing unit 307 selects any one of the plurality of context analyzing units included in the context analyzing unit 313, based on the type of the identified user situation information, and proceeds to operation 607. In operation 607, the context managing unit 307 transmits the user situation information request message to the selected context analyzing unit, and proceeds to operation 609.

In operation 609, the selected context managing unit receives the user situation information request message, and determines whether supplying of the user situation information for the specific application is valid. At this time, the selected context managing unit transmits, to the personal information managing unit 305, an authority inquiry message inquiring of the authority for reference/usage of the user situation information for the specific application. The selected context analyzing unit receives, from the personal information managing unit 305, an authority inquiry result message as a response to the authority inquiry message, and determines, by analyzing the received authority inquiry result message, whether supplying of the user situation information for the specific application is valid.

In operation 611, the selected context analyzing unit proceeds to operation 613 when it is determined that the supplying of the user situation information for the specific application is valid, and proceeds to operation 615 when it is determined that the supplying of the user situation information for the specific application is not valid.

When proceeding to operation 613, the selected context analyzing unit generates user situation information, and transmits the generated user situation information to the specific application. When proceeding to operation 615, the selected context analyzing unit generates a message representing that the supplying of the user situation information for the specific application is not valid so that the user situation information is not to be supplied, and transmits, to the specific application, the generated message representing that the supplying of the user situation information for the specific application is not valid.

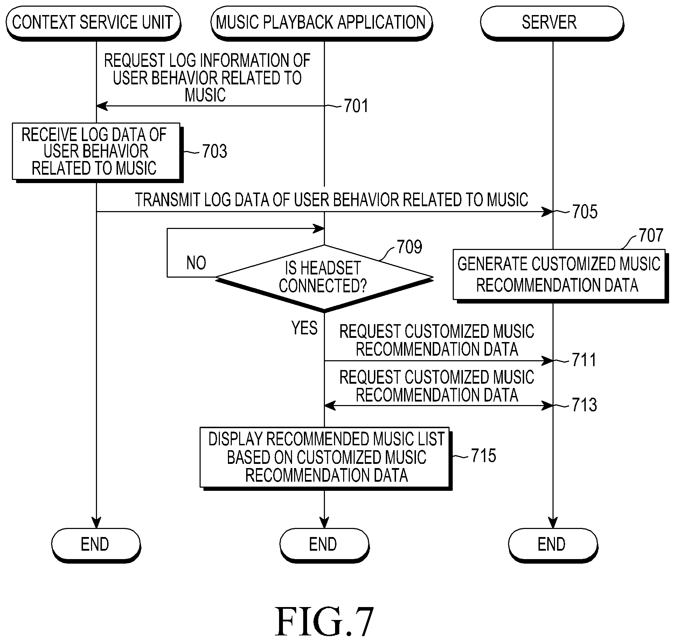

FIG. 7 is a flowchart illustrating a process of providing a recommended music list in a portable terminal according to the first embodiment of the present disclosure.

Referring to FIG. 7, in operation 701, a music playback application generates a music related user activity log transmission request message requesting that log information of a user activity related to music is to be transmitted to a server 103, and transmits the music related user activity log transmission request message to a context service unit 301.

In operation 703, the context service unit 301 receives the music related user activity log transmission request message from the music playback application and receives the log information of the user activity related to music from a specific application. The user activity related to music includes a music/video playback log.

In operation 705, the context service unit 301 generates log data for the user activity based on the received music related user activity log information and additional information and transmits the generated log data to the server 103.

In operation 707, the server 103 receives the log data for the user activity related to music and generates customized music recommendation data based on the received log data. The customized music recommendation data corresponds to data including a music list recommended in view of a preference of a user.

In operation 709, the music playback application determines whether a headset has been connected to the portable terminal. The music playback application proceeds to operation 711 when it is determined that the headset has been connected to the portable terminal, and repeatedly performs operation 709 when it is determined that the headset has not been connected to the portable terminal. When proceeding to operation 711, the music playback application generates a message requesting the customized music recommendation data and transmits the customized music recommendation data request message to the server 103. When the headset is connected to the portable terminal, the music playback application may be automatically executed.

In operation 713, the server 103 receives the customized music recommendation data request message, detects the customized music recommendation data and transmits the detected customized music recommendation data to the specific application.

In operation 715, the music playback application receives the customized music recommendation data, generates a recommended music list based on the received customized music recommendation data, and displays the recommended music list. The music playback application may display a popup window including the recommended music list.

The recommended music list may be a music list containing a music genre similar to that which a user frequently plays back, or another music list (e.g., a new music list) of a musician whose music a user frequently plays back.

For example, the music playback application may detect a recommended music list from the customized music recommendation data, and may display the recommended music list 1005 together with the frequently listened music list, as displayed on the screen 1003 of FIG. 10.

Operations illustrated in FIG. 7 may be omitted or may be performed in a different order according to a design method of the portable terminal. For example, it has been illustrated in operations 709 to 715 of FIG. 7 that, when the headset is connected to the portable terminal, the music playback application transmits the customized music recommendation data request message, and receives the customized music recommendation data in response to the request. However, the music playback application may periodically receive the customized music recommendation data from the server 103 even when not transmitting the customized music recommendation data request message before the headset is connected, and may generate the recommended music list based on the received customized music recommendation data and display the generated recommended music list, when the headset is connected.

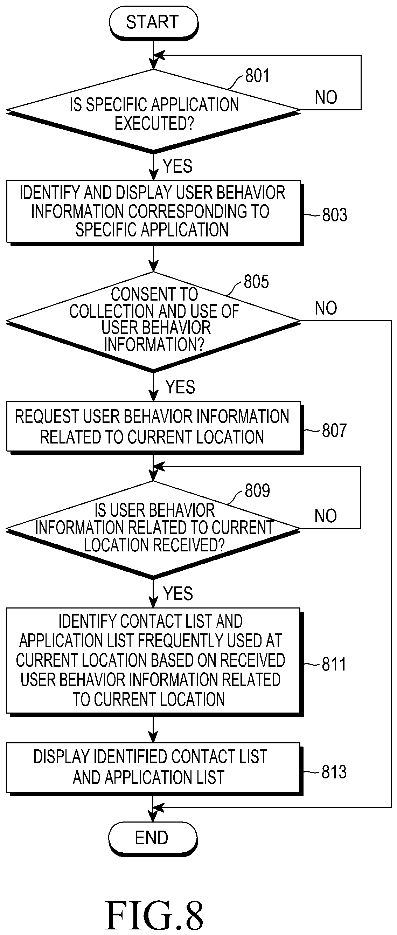

FIG. 8 is a flowchart illustrating a process of providing a contact list and an application list, which are related to current location, in a portable terminal according to the second embodiment of the present disclosure.

Referring to FIG. 8, in operation 801, a controller 201 determines whether a specific application is being executed. The controller 201 proceeds to operation 803 when it is determined that the specific application is being executed, and proceeds to operation 801 when it is determined that the specific application is not being executed.

When proceeding to operation 803, the controller 210 identifies log data for a user activity necessary for the specific application, displays a list of the identified log data for the user activity and a message inquiring whether reference/usage of the log data is to be approved, and then proceeds to operation 805. For example, as displayed on a screen 1101 of FIG. 11, the controller 201 may display a popup window 1103 that includes a list of log data and a message inquiring whether reference/usage of the listed log data is to be approved.

In operation 805, the controller 201 determines whether reference/usage of the log data for the user activity corresponding to the specific application is to be approved by the user. The controller proceeds to operation 807 when it is determined that the reference/usage of the log data for the user activity has been approved, and ends the specific application when it is determined that the reference/usage of the log data for the user activity has not been approved.

When proceeding to operation 807, the controller 210 requests the log data for the user activity related to a current location of the portable terminal 101 from the context service unit 310, and in operation 809, determines whether the log data for the user activity related to the current location of the portable terminal 101 is to be received. The log data for the user activity related to the current location of the portable terminal 101 includes a list of applications having a high execution frequency at the current location, and a list of contacts having a high contact frequency at the current location.

The controller 201 proceeds to operation 811 when it is determined that the log data has been received, and repeatedly performs operation 809 when it is determined that the log data has not been received.

When proceeding to operation 811, the controller 201 determines the list of the applications having the high execution frequency at the current location and the list of the contacts having the high contact frequency at the current location by analyzing the log data related to the received current location.

In operation 813, the controller 201 displays the contact list and the application list, which have been identified through the specific application. For example, when the portable terminal is currently located in an office, the controller 201 may display a list 1107 of contacts having a high contact frequency and a list 1109 of applications having a high execution frequency in the office.

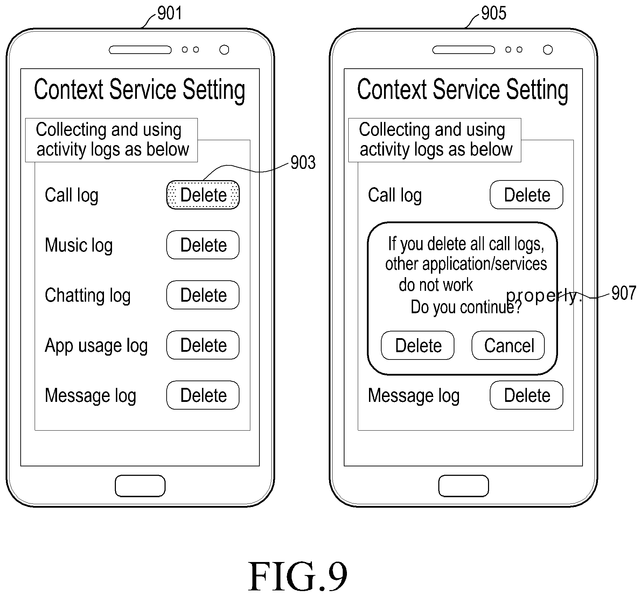

FIG. 9 illustrates a screen on which log data is deleted according to an embodiment of the present disclosure.

Referring to FIG. 9, a context service unit 301 provides a context setting application for deleting activity log data. The context setting application is an independent application, and a specific application related to the context service unit 301 may execute the context setting application through an application control.

The context setting application provides functions for registering the type of log data collected and used in the portable terminal 101 and the type of log data uploaded to the server 103, and deleting the activity log data. For example, as displayed on a screen 901, the context setting application may display titles of the activity log data and messages 903 inquiring whether the activity log data is to be deleted.

However, since the log data for the user activity collected in the application or the context service unit 301 is shared with the application related to the context service unit 301, the context setting application may display that the application may not work properly when deleting the corresponding log data. For example, as displayed on a screen 905, the context setting application may display a popup window 907 that includes a message representing that other applications may not work properly when deleting call log data, and a message inquiring whether the call log data is to be deleted.

In addition, the context setting application may provide context service related setting functions including a function of displaying the type of collected/used logs, a function of starting/ending log collection, a function of displaying the type of the log uploaded to the server, and a function of consenting/non-consenting to an upload to the server.

As described above, the present disclosure provides a device and a method for providing user activity information while protecting log data in an operating system of a portable terminal, which can protect personal information of a user.

Further, the present disclosure provides a device and a method for providing user activity information while collecting and managing log data in a portable terminal, which can enhance efficiency of data resources.

Furthermore, the present disclosure provides a device and a method for providing user activity information while collecting and managing log data in a portable terminal, which can make better user of the log data.

The method of providing user activity information in a portable terminal of the present disclosure can be implemented as a computer readable code in computer readable recording mediums. The computer-readable recording medium includes any and all types of recording devices in which data readable by a computer system are stored. As for such a recording medium, for example, a Read Only Memory (ROM), a Random Access Memory (RAM), an optical disc, a magnetic tape, a floppy disc, a hard disc, or a non-volatile memory may be used. In addition, the computer-readable recording medium may be stored with codes which are distributed in computer systems connected by a network such that the codes can be read and executed by a computer in a distributed method.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A context service unit (301) for providing user activity information in a portable terminal, the context service unit comprising:
a log database (311) configured to store log data related to a user activity; wherein the log data comprises application related log data or activity log data; and
a controller configured to store the log data received from a specific application, to receive a request for the user situation information comprising user activity information and location and movement information of the portable device , to transmit an authority inquiry message; to receive an authority inquiry result message; to determine, by analyzing the authority inquiry result message, whether supplying of the user situation information for the specific application is authorized, to generate user situation information, representing a current status of a user, based on the stored log data, when it is determined that the supplying of the user situation information for the specific application is authorized, and to transmit the generated user situation information to the specific application;
wherein the controller is further configured to:
display, when the specific application is executed, whether collection and usage of the log data provided from the specific application is to be approved,
generate the log data information reference/usage authority registration information corresponding to the specific application, according to an input of the user, and
update the user situation information reference/usage authority registration information for the application based on the log data information reference/usage authority registration information.

2. The context service unit of claim 1, wherein the log data comprises at least one of a call log, a chatting log, a music/video playback log, a web browsing log, and an e-book reading log, and an identifier of at least one application that processes the corresponding log.

3. The context service unit of claim 1, wherein the controller comprises a log data collecting unit configured to transmit, to a server, log data that a user consents to upload among the log data.

4. The context service unit of claim 1, wherein the controller comprises:
a context analyzing unit configured to generate the user situation information based on information received from at least one sensor and the log data;
a context managing unit configured to request generation of the user situation information, and to transmit the user situation information to the specific application; and
a personal information managing unit configured to manage usage authority for the log data and the user situation information.

5. The context service unit of claim 4, wherein the context managing unit transmits an update message of the user situation information to the specific application when the user situation information is updated.

6. The context service unit of claim 4, wherein the personal information managing unit manages the usage authority for the log data and the user situation information, based on log data reference/usage authority registration information for each application, user situation information reference/usage authority registration information for the application, and log data list information for a server upload.

7. The context service unit of claim 1, wherein the controller displays, when the specific application is executed, the log data list information and whether the log data list information is to be approved, and updates the log data list for the server upload according to an input of the user.

8. A method of providing user activity information in a portable terminal, the method comprising:
storing log data received from a specific application wherein the log data comprises application related log data or activity log data;
receiving a request for the user situation information comprising user activity information and location and movement information of the portable device;
to transmit an authority inquiry message;
to receive an authority inquiry result message;
determining whether supplying of the user situation information for the specific application is authorized;
generating user situation information, representing a current status of a user, based on the stored log data, when it is determined by analyzing the authority inquiry result message, that the supplying of the user situation information for the specific application is authorized; transmitting the generated user situation information to the specific application;
displaying, when the specific application is executed, whether collection and usage of the log data provided from the specific application is to be approved;
generating the log data information reference/usage authority registration information corresponding to the specific application, according to an input of the user; and
updating the user situation information reference/usage authority registration information for the application based on the log data information reference/usage authority registration information.

9. The method of claim 8, wherein the log data comprises at least one of a call log, a chatting log, a music/video playback log, a web browsing log, and an e-book reading log, and an identifier of at least one application that processes the corresponding log.

10. The method of claim 8, further comprising:
transmitting, to a server, log data that a user consents to upload among the log data.

11. The method of claim 8, wherein the transmitting of the user situation information comprises:
generating the user situation information based on information received from at least one sensor and the log data; and
transmitting the user situation information to the specific application according to usage authority for the log data and the user situation information.

12. The method of claim 11, wherein the transmitting of the user situation information comprises:
transmitting the log data and the user situation information, based on log data reference/usage authority registration information for each application, user situation information reference/usage authority registration information for the application, and log data list information for a server upload.

13. The method of claim 8, further comprising:
displaying, when the specific application is executed, the log data list information and whether the log data list information is to be approved; and
updating the log data list for the server upload according to an input of the user.

## Patentansprüche

1. Kontextdiensteinheit (301) zum Bereitstellen von Benutzeraktivitätsinformationen in einem tragbaren Endgerät, wobei die Kontextdiensteinheit umfasst:
eine Protokolldatenbank (311), die ausgelegt ist, um Protokolldaten bezüglich einer Benutzeraktivität zu speichern;
wobei die Protokolldaten anwendungsbezügliche Protokolldaten oder Aktivitätsprotokolldaten umfassen; und
eine Steuerung, die ausgelegt ist, um die von einer spezifischen Anwendung empfangenen Protokolldaten zu speichern, um eine Anfrage für die Benutzersituationsinformationen, die Benutzeraktivitätsinformationen und Positions- und Bewegungsinformationen der tragbaren Vorrichtung umfassen, zu empfangen, um eine Autoritätsermittlungsnachricht zu senden, um eine Autoritätsermittlungsergebnisnachricht zu empfangen, um durch Analysieren der Autoritätsermittlungsergebnisnachricht zu bestimmen, ob das Zuführen der Benutzersituationsinformationen für die spezifische Anwendung autorisiert ist, um Benutzersituationsinformationen, die einen aktuellen Status eines Benutzers darstellen, basierend auf den gespeicherten Protokolldaten zu erzeugen, wenn bestimmt wird, dass das Zuführen der Benutzersituationsinformationen für die bestimmte Anwendung autorisiert ist, und um die erzeugten Benutzersituationsinformationen an die spezifische Anwendung zu senden;
wobei die Steuerung ferner ausgelegt ist zum: Anzeigen, wenn die spezifische Anwendung ausgeführt wird, ob das Sammeln und die Verwendung der von der spezifischen Anwendung bereitgestellten Protokolldaten genehmigt werden sollen,
Erzeugen der Protokolldateninformationenreferenz/Verwendungsautoritätsregistrierungsinformationen entsprechend der spezifischen Anwendung gemäß einer Eingabe des Benutzers, und
Aktualisieren der Benutzersituationsinformationenreferenz/Verwendungsautoritätsregistrierungsinformationen für die Anwendung basierend auf den Protokolldateninformationenreferenz/Verwendungsautoritätsregistrierungsinformationen.

2. Kontextdiensteinheit nach Anspruch 1, wobei die Protokolldaten ein Anrufprotokoll, ein Chatprotokoll, ein Musik-/Videowiedergabeprotokoll, ein Webbrowsingprotokoll und/oder ein E-Book-Leseprotokoll und/oder eine Kennung mindestens einer Anwendung, die das entsprechende Protokoll verarbeitet, umfassen.

3. Kontextdiensteinheit nach Anspruch 1, wobei die Steuerung eine Protokolldatensammeleinheit umfasst, die ausgelegt ist, um an einen Server Protokolldaten zu senden, denen ein Benutzer zustimmt, zu den Protokolldaten hochzuladen.

4. Kontextdiensteinheit nach Anspruch 1, wobei die Steuerung umfasst:
eine Kontextanalyseeinheit, die ausgelegt ist, um die Benutzersituationsinformationen basierend auf von einem Sensor und/oder den Protokolldaten empfangenen Informationen zu erzeugen;
eine Kontextverwaltungseinheit, die ausgelegt ist, um eine Erzeugung der Benutzersituationsinformationen anzufragen und um die Benutzersituationsinformationen an die spezifische Anwendung zu senden; und
eine Persönliche-Informationenverwaltungseinheit, die ausgelegt ist, um Verwendungsautorität für die Protokolldaten und die Benutzersituationsinformationen zu verwalten.

5. Kontextdiensteinheit nach Anspruch 4, wobei die Kontextverwaltungseinheit eine Aktualisierungsnachricht der Benutzersituationsinformationen an die spezifische Anwendung sendet, wenn die Benutzersituationsinformationen aktualisiert werden.

6. Kontextdiensteinheit nach Anspruch 4, wobei die Persönliche-Informationenverwaltungseinheit die Verwendungsautorität für die Protokolldaten und die Benutzersituationsinformationen verwaltet, basierend auf
Protokolldatenreferenz/Verwendungsautoritätsregistrier -ungsinformationen für jede Anwendung, Benutzersituationsinformationenreferenz/Verwendungsautoritätsregistrierungsinformationen für die Anwendung und Protokolldatenlisteninformationen für einen Server-Upload.

7. Kontextdiensteinheit nach Anspruch 1, wobei, wenn die spezifische Anwendung ausgeführt wird, die Steuerung die Protokolldatenlisteninformationen anzeigt und, ob die Protokolldatenlisteninformationen genehmigt werden sollen, und die Protokolldatenliste für den Server-Upload gemäß einer Eingabe des Benutzers aktualisiert.

8. Verfahren zum Bereitstellen von Benutzeraktivitätsinformationen in einem tragbaren Endgerät, wobei das Verfahren umfasst:
Speichern von Protokolldaten von einer spezifischen Anwendung, wobei die Protokolldaten anwendungsbezügliche Protokolldaten oder Aktivitätsprotokolldaten umfassen;
Empfangen einer Anfrage für die Benutzersituationsinformationen, die Benutzeraktivitätsinformationen und Positions- und Bewegungsinformationen der tragbaren Vorrichtung umfassen;
um eine Autoritätsermittlungsnachricht zu senden;
um eine Autoritätsermittlungsergebnisnachricht zu empfangen;
Bestimmen, ob das Zuführen der Benutzersituationsinformationen für die spezifische Anwendung autorisiert ist;
Erzeugen von Benutzersituationsinformationen, die einen aktuellen Status eines Benutzers darstellt, basierend auf den gespeicherten Protokolldaten, wenn durch Analysieren der Autoritätsermittlungsergebnisnachricht bestimmt wird, dass das Zuführen der Benutzersituationsinformationen für die spezifische Anwendung autorisiert ist; Senden der erzeugten Benutzersituationsinformationen an die spezifische Anwendung;
Anzeigen, wenn die spezifische Anwendung ausgeführt wird, ob das Sammeln und die Verwendung der von der spezifischen Anwendung bereitgestellten Protokolldaten genehmigt werden sollen;
Erzeugen der Protokolldateninformationenreferenz/Verwendungsautoritätsregistrierungsinformationen entsprechend der spezifischen Anwendung gemäß einer Eingabe des Benutzers; und
Aktualisieren der Benutzersituationsinformationenreferenz/Benutzerautori -tätsregistrierungsinformationen für die Anwendung basierend auf den Protokolldateninformationenreferenz/Verwendungsautoritätsregistrierungsinformationen.

9. Verfahren nach Anspruch 8, wobei die Protokolldaten ein Anrufprotokoll, ein Chatprotokoll, ein Musik-/Videowiedergabeprotokoll, ein Webbrowsingprotokoll und/oder ein E-Book-Leseprotokoll und/oder eine Kennung mindestens einer Anwendung, die das entsprechende Protokoll verarbeitet, umfassen.

10. Verfahren nach Anspruch 8, ferner umfassend:
Senden von Protokolldaten, denen ein Benutzer zustimmt, zu den Protokolldaten hochzuladen, an einen Server.

11. Verfahren nach Anspruch 8, wobei das Senden der Benutzersituationsinformationen umfasst:
Erzeugen der Benutzersituationsinformationen basierend auf von einem Sensor und/oder den Protokolldaten empfangenen Informationen; und
Senden der Benutzersituationsinformationen an die spezifische Anwendung gemäß der Verwendungsautorität für die Protokolldaten und die Benutzersituationsinformationen.

12. Verfahren nach Anspruch 11, wobei das Senden der Benutzersituationsinformationen umfasst:
Senden der Protokolldaten und der Benutzersituationsinformationen basierend auf Protokolldatenreferenz/Verwendungsautoritätsregistrier -ungsinformationen für jede Anwendung, Benutzersituationsinformationenreferenz/Verwendungsautoritätsregistrierungsinformationen für die Anwendung und Protokolldatenlisteninformationen für einen Server-Upload.

13. Verfahren nach Anspruch 8, ferner umfassend:
Anzeigen, wenn die spezifische Anwendung ausgeführt wird, der Protokolldatenlisteninformationen und, ob die Protokolldatenlisteninformationen genehmigt werden sollen; und
Aktualisieren der Protokolldatenliste für den Server-Upload gemäß einer Eingabe des Benutzers.

## Revendications

1. Unité de service de contexte (301) pour fournir de l'information d'activité d'utilisateur dans un terminal portable, l'unité de service de contexte comprenant :
une base de données de journal (311) configurée pour stocker des données de journal concernant une activité d'utilisateur ;
dans laquelle les données de journal comprennent des données de journal relatives à une application ou des données de journal d'activité ; et
un contrôleur configuré pour stocker les données de journal reçues de la part d'une application spécifique, pour recevoir une demande pour l'information de situation d'utilisateur comprenant de l'information d'activité d'utilisateur et de l'information de localisation et de déplacement du dispositif portable, pour transmettre un message de demande d'autorisation ; pour recevoir un message de résultat de demande d'autorisation ; pour déterminer, en analysant le message de résultat de demande d'autorisation, si la fourniture de l'information de situation d'utilisateur est autorisée pour l'application spécifique, pour générer de l'information de situation d'utilisateur représentant un état actuel d'un utilisateur sur la base des données de journal stockées lorsque l'on détermine que la fourniture de l'information de situation d'utilisateur est autorisée pour l'application spécifique, et pour transmettre l'information de situation d'utilisateur générée à l'application spécifique ;
dans lequel le contrôleur est en outre configuré pour :
afficher, lorsque l'application spécifique est exécutée, si la collecte et l'utilisation des données de journal fournies par l'application spécifique doit être approuvée,
générer l'information d'enregistrement d'autorisation de renvoi à/utilisation de l'information de données de journal correspondant à l'application spécifique en fonction d'une entrée de l'utilisateur, et
mettre à jour l'information d'enregistrement d'autorisation de renvoi à/utilisation de l'information de situation d'utilisateur pour l'application sur la base de l'information d'enregistrement d'autorisation de renvoi à/utilisation de l'information de données de journal.

2. Unité de service de contexte selon la revendication 1, dans laquelle les données de journal comprennent au moins l'un parmi un journal d'appels, un journal de chats, un journal de lecture de musique/vidéo, un journal de navigation web, et un journal de lecture de livres électroniques, et un identificateur d'au moins une application qui traite le journal correspondant.

3. Unité de service de contexte selon la revendication 1, dans laquelle le contrôleur comprend une unité de collecte de données de journal configurée pour transmettre, à un serveur, des données de journal qu'un utilisateur consent à télétransmettre parmi les données de journal.

4. Unité de service de contexte selon la revendication 1, dans laquelle le contrôleur comprend :
une unité d'analyse de contexte configurée pour générer l'information de situation d'utilisateur sur la base d'une information reçue d'au moins un détecteur et des données de journal ;
une unité de gestion de contexte configurée pour demander la génération de l'information de situation d'utilisateur et pour transmettre l'information de situation d'utilisateur à l'application spécifique ; et
une unité de gestion d'informations personnelles configurée pour gérer l'autorisation d'utilisation pour les données de journal et l'information de situation d'utilisateur.

5. Unité de service de contexte selon la revendication 4, dans laquelle l'unité de gestion de contexte transmet un message de mise à jour de l'information de situation d'utilisateur à l'application spécifique lorsque l'information de situation d'utilisateur est mise à jour.

6. Unité de service de contexte selon la revendication 4, dans laquelle l'unité de gestion des informations personnelles gère l'autorisation d'utilisation pour les données de journal et l'information de situation d'utilisateur sur la base d'une information d'enregistrement d'autorisation de renvoi à/utilisation des données de journal pour chaque application, d'une information d'enregistrement d'autorisation de renvoi à/utilisation d'une information de situation d'utilisateur pour l'application, et d'une information de liste de données de journal pour une télétransmission au serveur.

7. Unité de service de contexte selon la revendication 1, dans laquelle le contrôleur affiche, lorsque l'application spécifique est exécutée, l'information de liste de données de journal et s'il faut approuver l'information de liste de données de journal, et met à jour la liste de données de journal pour la télétransmission au serveur en fonction d'une entrée de l'utilisateur.

8. Procédé de fourniture d'informations d'activité d'utilisateur dans un terminal portable, le procédé comprenant :
le stockage de données de journal reçues d'une application spécifique, dans lequel les données de journal comprennent des données de journal relatives à l'application ou des données de journal d'activité ;
la réception d'une demande pour l'information de situation d'utilisateur comprenant de l'information d'activité d'utilisateur et de l'information de localisation et de déplacement du dispositif portable ;
pour transmettre un message de demande d'autorisation ;
pour recevoir un message de résultat de demande d'autorisation ;
la détermination si la fourniture de l'information de situation d'utilisateur est autorisée pour l'application spécifique ;
la génération d'une information de situation d'utilisateur, représentant un état actuel d'un utilisateur, sur la base des données de journal stockées lorsque l'on détermine, en analysant le message de résultat de demande d'autorisation, que la fourniture de l'information de situation d'utilisateur est autorisée pour l'application spécifique ; la transmission de l'information de situation d'utilisateur générée à l'application spécifique ;
l'affichage, lorsque l'application spécifique est exécutée, s'il faut approuver une collecte et une utilisation des données de journal fournies par l'application spécifique ;
la génération de l'information d'enregistrement d'autorisation de renvoi à/utilisation de l'information de données de journal correspondant à l'application spécifique en fonction d'une entrée de l'utilisateur ; et
la mise à jour de l'information d'enregistrement d'autorisation de renvoi à/utilisation de l'information de situation d'utilisateur pour l'application sur la base de l'information d'enregistrement d'autorisation de renvoi à/utilisation de l'information de données de journal.

9. Procédé selon la revendication 8, dans lequel les données de journal comprennent au moins l'un parmi un journal des appels, un journal des chats, un journal de lecture de musique/vidéo, un journal de navigation web, et un journal de lecture de livres électroniques, et un identificateur d'au moins une application qui traite le journal correspondant.

10. Procédé selon la revendication 8, comprenant en outre :
la transmission, à un serveur, de données de journal qu'un utilisateur consent à télétransmettre parmi les données de journal.

11. Procédé selon la revendication 8, dans lequel la transmission de l'information de situation d'utilisateur comprend :
la génération de l'information de situation d'utilisateur sur la base d'une information reçue d'au moins un détecteur et des données de journal ; et
la transmission de l'information de situation d'utilisateur à une application spécifique en fonction d'une autorisation d'utilisation pour les données de journal et l'information de situation d'utilisateur.

12. Procédé selon la revendication 11, dans lequel la transmission de l'information de situation d'utilisateur comprend :
la transmission des données de journal et de l'information de situation d'utilisateur, sur la base d'une information d'enregistrement d'autorisation de renvoie à/utilisation des données de journal pour chaque application, d'une information d'enregistrement d'autorisation de renvoi à/utilisation d'une information de situation d'utilisateur pour l'application, et d'une information de liste de données de journal pour une télétransmission à un serveur.

13. Procédé selon la revendication 8, comprenant en outre :
l'affichage, lorsque l'application spécifique est exécutée, de l'information de liste de données de journal et s'il faut approuver l'information de liste de données de journal ; et
la mise à jour de la liste de données de journal pour la télétransmission au serveur en fonction d'une entrée de l'utilisateur.
